# EUROPÄISCHE PATENTANMELDUNG

(11) **EP 2 262 101 A1**
(43) Veröffentlichungstag der Anmeldung: **15.12.2010**
(21) Anmeldenummer: 09007792.6
(22) Anmeldetag: 12.06.2009
(51) Int. Cl.: H02P 9/08, H02P 9/30, F01D 25/36

(54) **Verfahren und Anordnung zum Turnbetrieb eines Turbosatzes**

(71) Anmelder: SIEMENS AKTIENGESELLSCHAFT, 80333 München (DE)
(72) Erfinder: Lehmann, Christoph, 47506 Neukirchen-Vluyn (DE)

(57) **Zusammenfassung**

Die Erfindung betrifft eine Anordnung, umfassend einen elektrischen Generator (2) sowie eine Dampfturbine (1) und eine Erregereinrichtung, wobei die Erregereinrichtung derart ausgebildet ist, dass während eines Nennbetriebs (N) die Hilfserregermaschine (4, 11) als permanent erregte Synchronmaschine und in einem Turnbetrieb (T) die Hilfserregermaschine (4, 11) als ein Synchronmotor bzw. Turnmotor ausgebildet ist.

## Beschreibung

Die Erfindung betrifft eine Anordnung, umfassend einen elektrischen Generator, eine Haupterregermaschine und eine Hilfserregermaschine sowie ein Verfahren zum Turnen eines eine Dampfturbine und/oder Gasturbine und/oder Generator umfassenden Wellenstranges.

Ein Turbosatz mit einem Drehstromsynchrongenerator wird üblicherweise für die Erzeugung elektrischer Energie in einem Kraftwerk eingesetzt. Der Turbosatz umfasst im Wesentlichen eine Gasturbine, einen Drehstromsynchrongenerator und eine Erregerstromeinrichtung sowie ggf. eine Dampfturbine. Der von dem Generator erzeugte Drehstrom wird an der Ständerwicklung des Generators abgenommen, während die Läuferwicklung zur Erzeugung eines Magnetfeldes mit Gleichstrom erregt wird. Es ist bekannt, den Gleichstrom über bürstenlose rotierende Gleichrichtererregermaschinen oder einer statischen thyristorgesteuerten Erregereinrichtung über Schleifringe bereitzustellen. Eine bürstenlose Gleichrichtererregermaschine mit Außenpolen ist derart mit dem Generator gekoppelt, dass ihr Läufer mit der Generatorwelle rotiert. In solch einem Fall kann der zunächst in der Erregermaschine erzeugte Drehstrom mit Hilfe von mit der Läuferwelle der Erregermaschine rotierenden Gleichrichtern gleichgerichtet werden. Der von einer solchen Gleichrichtererregermaschine erzeugte Gleichstrom kann direkt, ohne Schleifringe, zum Läufer des Generators geleitet werden.

Im Gegensatz zu einem Turbosatz mit einer Dampfturbine als Antrieb kann eine Gasturbine den Turbosatz nicht selbständig hochfahren. Das Hochfahren des Turbosatzes erfolgt im Allgemeinen aus dem sogenannten Turnbetrieb mit einer Drehzahl von etwa 100 Min⁻¹ bis 200 Min⁻¹, wofür meist ein ölhydraulischer Antrieb verwendet wird, heraus. Bekanntlich kann eine Gasturbine erst bei einer ausreichenden Drehzahl von ca. 1000 U/min gezündet werden und die weitere Hochfahrt bis zur Nenndrehzahl übernehmen. Um diese Grenzdrehzahl zu erreichen, kann ein gesonderter sogenannter Anfahrmotor oder der Generator als frequenzgesteuerter Motor zum Hochfahren verwendet werden.

Die Wellenstränge in den Kraftwerken, die eine Dampf- und/oder Gasturbine sowie einen Generator umfassen, müssen nach dem Herunterfahren aus dem Betrieb mit Nenndrehzahlen mit einer geringen Drehzahl gedreht werden, was auch als Turnen bezeichnet wird, um bei dem Erkalten ein Verformen der Wellen zu vermeiden.

Der Wellenstrang wird hierbei mit einem eigens dafür angebauten öldruckbetriebenen Hydraulikmotor mit Drehzahlen von ca. 2 U/min bis ca. 70 U/min bewegt.

Durch die Verwendung von Öl für den öldruckbetriebenen Hydraulikmotor besteht immer die Gefahr eines Brandes. Es ist Aufgabe der Erfindung, eine Anordnung und ein Verfahren anzugeben, mit dem ein Wellenstrang in einem Kraftwerk geturnt werden kann, ohne hierbei einen externen öldruckbetriebenen Hydraulikmotor zu verwenden.

Gelöst wird diese Aufgabe durch eine Anordnung, umfassend einen elektrischen Generator, eine Haupterregermaschine und eine Hilfserregermaschine, wobei die Hilfserregermaschine in einem Nennbetrieb zur Erzeugung einer elektrischen Spannung und in einem Turnbetrieb als Turnmotor ausgebildet ist.

Im Nennbetrieb ist die Hilfserregermaschine eine permanent erregte Synchronmaschine, die am Ende des generatorseitigen Wellenstranges als Bestandteil der rotierenden Erregereinrichtung eingebaut ist. Im Nennbetrieb ist die Hilfserregermaschine als Synchrongenerator ausgebildet, der die Spannung für die Erregerwicklung der Haupterregermaschine erzeugt. Erfindungsgemäß wird nun vorgeschlagen, die Hilfserregermaschine als Synchronmotor auszubilden, der den Wellenstrang mit den erforderlichen Turndrehzahlen von ca. 2 U/min bis 70 U/min antreibt. Somit entfällt der öldruckbetriebene Hydraulikmotor gänzlich für den Turnantrieb. Des Weiteren kann die Baulänge des Maschinenhauses insgesamt verkürzt werden.

Die Umstellung der Hilfserregermaschine, die zunächst als Synchrongenerator arbeitet, zu einem den Wellenstrang antreibenden Synchronmotor, erfolgt durch ein Umschalten der Klemmen der Hilfserregermaschine auf ein entsprechendes Drehstromspeisegerät. Dieses Drehstromspeisegerät erzeugt eine variable elektrische Spannung mit einer variablen Frequenz. Die Hilfserregermaschine wird somit zu einem Synchronmotor, dessen Drehzahl durch das Drehstromspeisegerät eingestellt werden kann und die erforderlichen Turndrehzahlen von ca. 3 U/min bis 100 U/min zur Verfügung stellt.

Günstig im Sinne der Erfindung ist es, zur Steuerung der Drehzahl ein entsprechendes Drehzahlsignal an den Tachogenerator der Turbine abzugeben.

Weitere vorteilhafte Weiterbildungen sind in den Unteransprüchen angegeben.

So wird in einer ersten vorteilhaften Weiterbildung der elektrische Generator, die Haupterregermaschine und die Hilfserregermaschine über eine Welle drehmomentübertragend miteinander gekoppelt. Günstig im Sinne der Erfindung wird somit vermieden, ein Getriebe oder ähnliche drehmomentübertragende Elemente einzusetzen.

In einer weiteren vorteilhaften Weiterbildung weist die Haupterregermaschine eine von der Hilfserregermaschine mit elektrischem Strom versorgte Ständerwicklung auf.

Die auf das Verfahren hin gerichtete Aufgabe wird durch ein Verfahren zum Turnen einer eine Dampfturbine und/oder Gasturbine und/oder Generator umfassenden Wellenstranges, wobei die für die Erzeugung eines magnetischen Feldes benötigte Hilfserregermaschine als Turnmotor betrieben wird.

Erfindungsgemäß wird bei dem Verfahren über ein Drehstromspeisegerät die Hilfserregermaschine mit elektrischer Spannung versorgt, wobei das Drehstromspeisegerät eine variable elektrische Spannung mit variabler Frequenz liefert.

Ein Ausführungsbeispiel der Erfindung wird anhand der nachfolgenden Zeichnungen näher erläutert.

Es zeigen:
- Figur 1: ein Übersichtsbild einer Anordnung;
- Figur 2: ein Prinzipschaltbild eines Turbosatzes mit rotie- render bürstenloser Erregermaschine.

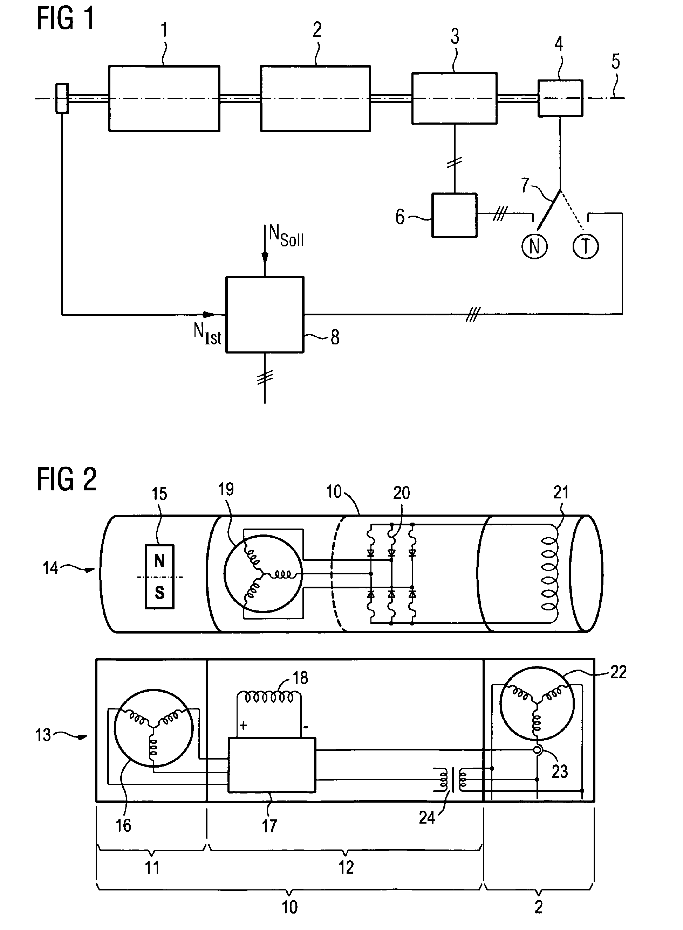

Die Figur 1 zeigt eine Dampfturbine 1, einen elektrischen Generator 2, eine Haupterregermaschine 3 und eine Hilfserregermaschine 4. Die Dampfturbine 1 umfasst einen nicht näher dargestellten Rotor, umfassend mehrere Laufschaufeln sowie ein Gehäuse, das mehrere Leitschaufeln aufweist. Der Rotor ist um eine Rotationsachse 5 drehbar gelagert. In alternativen Ausführungsformen kann zur Dampfturbine 1 zusätzlich eine Gasturbine drehmomentübertragend angeordnet werden. An die Dampfturbine 1 ist der elektrische Generator 2 drehmomentübertragend angeordnet. Der elektrische Generator 2 weist einen eine Läuferwicklung 19 aufweisenden Läufer sowie einen eine Ständerwicklung 22 aufweisenden Ständer auf. Die Läuferwicklung 19 wird von der Haupterregermaschine 3 mit einer elektrischen Spannung versorgt, was zu einem Magnetfeld führt, das infolge der drehbaren Bewegung um die Rotationsachse 5 zu einer induzierten Spannung in der Ständerwicklung 22 führt. Die Hilfserregermaschine 4 und die Haupterregermaschine 3 sind ebenso drehmomentübertragend miteinander gekoppelt.

Zwischen der Hilfserregermaschine 4 und der Haupterregermaschine 3 ist ein Gleichrichter und Spannungsregler 6 angeordnet, der die von der Hilfserregermaschine 4 übertragende elektrische Spannung gleichrichtet sowie die Höhe der elektrischen Spannung anpasst. Im Nennbetrieb, d. h. der Wellenstrang dreht mit einer Frequenz von 3000 U/min bzw. 3600 U/min ist ein Umschalter 7 in der Stellung N für Nennbetrieb. Sobald der Wellenstrang von den vergleichsweise hohen Drehzahlen runtergeführt werden muss auf niedrige Drehzahlen, wird der Umschalter 7 in die Stellung T für Turnbetrieb gebracht, wodurch eine Verbindung zu einem Drehstromspeisegerät 8 mit Steuerung ermöglicht wird. Das Drehstromspeisegerät 8 liefert eine elektrische Spannung, wobei die Höhe der elektrischen Spannung und die Frequenz der elektrischen Spannung variabel und einstellbar sind. Die Hilfserregermaschine 4 wird somit zu einem Synchronmotor ausgebildet, der den Wellenstrang mit der erforderlichen Turndrehzahl, die zwischen 3 U/min und 100 U/min liegt, antriebt. Zur Steuerung der als Turnmotor ausgebildeten Hilfserregermaschine wird als Eingangsgröße die Ist-Drehfrequenz Nᵢₛₜ und die Soll-Drehfrequenz Nₛₒₗₗ als Eingangsgröße für das Drehstromspeisegerät 8 bereitgestellt. Schließlich wird das Drehstromspeisegerät 8 über das elektrische Netz mit elektrischer Energie versorgt.

Die Figur 2 zeigt eine Prinzipschaltung des Turbosatzes mit einer rotierenden bürstenlosen Erregermaschine 10. Das Prinzipschaltbild zeigt den elektrischen Generator 2 mit bürstenloser rotierender Gleichrichtererregermaschine 10, die eine Hilfserregermaschine 11 und eine Haupterregermaschine 12 umfasst.

Sowohl der Generator 2 als auch die Gleichrichtererregermaschine 10 weisen stationäre Komponenten 13 und rotierende Komponenten 14 auf. In der Hilfserregermaschine 11 wird durch einen rotierenden Permanentmagneten 15 ein Strom in einer Hilfserregerwicklung 16 induziert, der einem Spannungsregler 17 zugeführt wird, an den eine Ständerwicklung 18 der Haupterregermaschine 12 angeschlossen ist. Anstelle der Spannungszuführung von der Hilfserregerwicklung 16 zum Spannungsregler 17 kann alternativ eine Spannungszuführung aus einem nicht dargestellten Netz zum Spannungsregler 17 vorgesehen sein. Die Ständerwicklung 18 erzeugt ein Feld, das in einer Läuferwicklung 19 der Haupterregermaschine 12 einen Strom induziert, der durch einen rotierenden Gleichrichter 20 gleichgerichtet wird. Dieser gleichgerichtete Strom wird einer Läuferwicklung 21 des elektrischen Generators 2 zugeführt, die als rotierende Feldwicklung auf dem hier nicht dargestellten Läufer 9 angebracht ist. In einer Ständerwicklung 22 des Generators 2 wird dadurch ein Drehstrom erzeugt, der in ein nicht dargestelltes Netz eingespeist werden kann. Der Spannungsregler 17 ist über einen Stromwandler 23 und einen Spannungswandler 24 an die Ständerwicklung 22 angeschlossen. Das Prinzipschaltbild gemäß Figur 2 zeigt den Nennbetrieb, bei der die Hilfserregermaschine als permanent erregte Synchronmaschine ausgebildet ist. Erfindungsgemäß wird die Hilfserregermaschine 11 über das Drehstromspeisegerät und dem Umschalter 7 als Synchronmotor betrieben, der den Wellenstrang mit den erforderlichen Turn-Drehzahlen bewegt.

## Patentansprüche

1. Anordnung,
umfassend einen elektrischen Generator (2), eine Haupterregermaschine (3, 12) und eine Hilfserregermaschine (4, 11), **dadurch gekennzeichnet, dass**
die Hilfserregermaschine (4, 11) in einem Nennbetrieb (N) zur Erzeugung einer elektrischen Spannung und in einem Turnbetrieb (T) als Turnmotor ausgebildet ist.

2. Anordnung nach Anspruch 1,
wobei der elektrische Generator (2), die Haupterregermaschine (3, 12) und die Hilfserregermaschine (4, 11) über eine Welle drehmomentübertragend miteinander gekoppelt sind.

3. Anordnung nach Anspruch 1 oder 2,
mit einem Drehstromspeisegerät (8), das die Hilfserregermaschine (4, 11) mit elektrischer Spannung variabler Frequenz versorgt.

4. Anordnung nach einem der vorhergehenden Ansprüche,
mit einem Umschalter (7), der zum Umschalten zwischen Nennbetrieb (N) und Turnbetrieb (T) ausgebildet ist.

5. Anordnung nach einem der vorhergehenden Ansprüche, wobei die Haupterregermaschine (3, 12) eine von der Hilfserregermaschine (4, 11) mit elektrischem Strom versorgte Ständerwicklung (18) aufweist.

6. Anordnung nach Anspruch 5,
wobei über die Ständerwicklung (18) eine elektrische Spannung in einer Läuferwicklung (19) der Haupterregermaschine (3, 12) induzierbar ist.

7. Anordnung nach einem der vorhergehenden Ansprüche, wobei die Hilfserregermaschine (4, 11) einen um eine Drehachse (5) rotierbaren Permanentmagneten (15) aufweist.

8. Anordnung nach einem der Ansprüche 3 bis 7,
wobei das Drehstromspeisegerät (8) eine Steuerung umfasst, wobei die tatsächliche Rotationsfrequenz (Nᵢₛₜ) der Anordnung und die Soll-Rotationsfrequenz (Nₛₒₗₗ) in der Steuerung als Eingangsgröße erfasst werden.

9. Verfahren zum Turnen eines eine Dampfturbine und/oder Gasturbine und/oder Generator umfassenden Wellenstranges, wobei die für die Erzeugung eines magnetischen Feldes benötigte Hilfserregermaschine (11) als Turnmotor betrieben wird.

10. Verfahren nach Anspruch 9,
wobei über ein Drehstromspeisegerät (8) die Hilfserregermaschine (4, 11) mit elektrischer Spannung versorgt wird, wobei das Drehstromspeisegerät (8) eine elektrische Spannung mit variabler Frequenz liefert.
